(19) Europäisches Patentamt
European Patent Office
Office européen des brevets

(11) **EP 4 341 207 B1**

(12) **FASCICULE DE BREVET EUROPEEN**

(45) Date de publication et mention
de la délivrance du brevet:
**08.07.2026 Bulletin 2026/28**

(21) Numéro de dépôt: **22729599.5**

(22) Date de dépôt: **18.05.2022**

(51) Classification Internationale des Brevets (IPC):
*C01B 3/08* (2026.01)    *C25B 1/02* (2006.01)
*C25B 9/17* (2021.01)    *C25B 15/08* (2006.01)
*C25C 1/16* (2006.01)    *C25B 1/50* (2021.01)
*H01M 8/065* (2016.01)

(52) Classification Coopérative des Brevets (CPC):
**C01B 3/08; C25B 1/02; C25B 1/50; C25B 9/17;
C25B 15/08; C25B 15/087; H01M 8/065;** C25C 1/16

(86) Numéro de dépôt international:
**PCT/EP2022/063457**

(87) Numéro de publication internationale:
**WO 2022/243383 (24.11.2022 Gazette 2022/47)**

(54) **REACTEUR ELECTROCHIMIQUE ADAPTE A PRODUIRE DE L'HYDROGENE A LA DEMANDE ET COMPORTANT UN DISPOSITIF AMELIORE DE STOCKAGE ET DE FOURNITURE D'HYDROGENE**

ELEKTROCHEMISCHER REAKTOR ZUR HERSTELLUNG VON WASSERSTOFF AUF ANFRAGE MIT EINER VERBESSERTEN VORRICHTUNG ZUR SPEICHERUNG UND ZUFUHR VON WASSERSTOFF

ELECTROCHEMICAL REACTOR SUITABLE FOR PRODUCING HYDROGEN ON DEMAND AND COMPRISING AN IMPROVED DEVICE FOR STORING AND SUPPLYING HYDROGEN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.05.2021 FR 2105219**

(43) Date de publication de la demande:
**27.03.2024 Bulletin 2024/13**

(73) Titulaire: **Elhytec
30400 Villeneuve-lès-Avignon (FR)**

(72) Inventeurs:
• **CHAIX, Jean-Edmond
26780 MALATAVERNE (FR)**
• **PAILLÈRE, Patrick
26780 MALATAVERNE (FR)**

(74) Mandataire: **Santarelli
Tour Trinity
1 bis Place de la Défense
92400 Courbevoie (FR)**

(56) Documents cités:
**WO-A1-2017/115269    WO-A1-2019/193281
KR-A- 20180 010 603    US-A1- 2009 081 501
US-B2- 8 858 910**

# Description

## DOMAINE TECHNIQUE

Le domaine de l'invention est celui des réacteurs électrochimiques adaptés à produire de l'hydrogène gazeux à la demande, qui comportent un dispositif permettant de stocker l'hydrogène sous une forme non gazeuse puis de fournir l'hydrogène sous forme gazeuse. Un tel réacteur électrochimique trouve notamment une application dans le domaine des générateurs électriques à hydrogène, c'est-à-dire des générateurs électriques comportant un réacteur électrochimique fournissant l'hydrogène gazeux à un moteur à hydrogène qui produit alors de l'énergie électrique. De tels générateurs électriques à hydrogène peuvent être utilisés comme des groupes électrogènes.

## ÉTAT DE LA TECHNIQUE ANTÉRIEURE

Il existe des réacteurs électrochimiques adaptés à produire de l'hydrogène gazeux à la demande, notamment pour fournir de l'hydrogène gazeux à une pile à combustible. Le réacteur électrochimique et la pile à combustible forment alors un générateur électrique à hydrogène.

Les générateurs électriques à hydrogène sont ainsi des systèmes adaptés à produire de l'énergie électrique à partir d'hydrogène. Ils comportent un moteur à hydrogène, par exemple une pile à combustible, et un dispositif de stockage et de fourniture d'hydrogène au moteur à hydrogène. Ils peuvent être utilisés comme des groupes électrogènes, c'est-à-dire comme des sources autonomes d'énergie électrique adaptées à fournir de l'électricité pour toute sorte d'applications stationnaires ou mobiles, par exemple pour pallier une interruption de l'alimentation par le réseau de distribution électrique ou par la source électrique principale.

La pile à combustible utilise de l'hydrogène comme combustible et de l'oxygène comme comburant (air ou oxygène pur). Il peut s'agir, par exemple, d'une pile à combustible de type à membrane échangeuse de protons (PEMFC, pour *Proton Exchange Membrane Fuel Cell*, en anglais), voire d'une pile à combustible à oxyde solide (SOFC, pour *Solid Oxide Fuel Cell*, en anglais).

Selon un exemple, le dispositif de stockage et de fourniture est adapté à stocker l'hydrogène lors de la phase d'attente du générateur électrique, c'est-à-dire lorsque la production d'énergie électrique n'est pas requise, puis de fournir l'hydrogène à la pile à combustible lorsque la phase de production d'énergie électrique est enclenchée. A titre d'exemple, le dispositif de stockage et de fourniture peut stocker à proximité de la pile à combustible des bouteilles d'hydrogène sous pression à plusieurs centaines de bars, par exemple à 200 bar. Les bouteilles vides sont régulièrement retournées chez l'approvisionneur pour y être remplies.

Cependant, cette solution présente l'inconvénient d'avoir à stocker potentiellement un grand nombre de bouteilles d'hydrogène sous pression, selon la quantité d'énergie électrique à fournir, ce stockage ayant lieu à proximité de l'équipement consommateur (hôpital, centre de données informatiques...), ce qui peut poser des problèmes en termes de sécurité. De plus, le réapprovisionnement en hydrogène implique un coût non négligeable en termes de pollution (production d'hydrogène à partir d'hydrocarbures, déplacement de camions dédiés...) et d'énergie (utilisation d'un compresseur pour remplir les bouteilles à haute pression...).

Selon un autre exemple, illustré dans le document US8858910B2, le générateur électrique peut comporter un réacteur électrochimique adapté à produire de l'hydrogène à la demande. Plus précisément, le réacteur électrochimique comporte un dispositif de stockage et de fourniture permettant de produire de l'hydrogène gazeux par électrolyse de l'eau assistée à l'aluminium, pour ainsi alimenter une pile à combustible.

Cependant, en fonctionnement, la réaction de production d'hydrogène gazeux se termine lorsqu'il n'y a plus d'aluminium solide. Il est alors nécessaire d'ouvrir l'enceinte pour en retirer l'électrolyte liquide, de nettoyer l'enceinte, pour ensuite recharger le réacteur électrochimique en électrolyte alcalin riche en hydroxyde de sodium d'une part, et en aluminium solide d'autre part. Cela nécessite une intervention lourde de la part de l'utilisateur après chaque étape de production d'hydrogène gazeux, ce qui diminue notamment la facilité d'utilisation du réacteur électrochimique et réduit la durée où le générateur électrique est effectivement opérationnel.

## EXPOSÉ DE L'INVENTION

L'invention a pour objectif de remédier au moins en partie aux inconvénients de l'art antérieur, et plus particulièrement de proposer un réacteur électrochimique adapté à produire de l'hydrogène gazeux à la demande, comportant un dispositif amélioré de stockage et de fourniture d'hydrogène, qui présente alors des risques réduits en termes de sécurité. Un tel réacteur électrochimique peut notamment être présent dans un générateur électrique à hydrogène.

Pour cela, l'objet de l'invention est un réacteur électrochimique destiné à produire de l'hydrogène gazeux à la demande. Il comporte un dispositif de stockage et de fourniture d'hydrogène et un dispositif de commande.

Le dispositif de stockage et de fourniture d'hydrogène est adapté à stocker de l'hydrogène sous une forme non gazeuse et à produire et fournir de l'hydrogène gazeux. Il comporte : une couche d'un métal M en phase solide d'un couple redox $M^{n+}/M$, et un électrolyte liquide aqueux adapté à oxyder la couche du métal M en phase solide conduisant à la production d'hydrogène gazeux ; et une enceinte principale, adaptée à recevoir l'électrolyte et la couche du métal M en phase solide, et comportant une sortie pour fournir l'hydrogène gazeux.

Le dispositif de commande est adapté à assurer un déplacement relatif entre l'électrolyte et la couche de métal M, de manière à pouvoir présenter successivement au moins les deux configurations suivantes : une configuration de retrait lors d'une phase d'attente, où il y a une séparation physique entre l'électrolyte et la couche de métal M ; et une configuration de contact lors d'une phase de production, où il y a contact physique entre l'électrolyte et la couche de métal M dans l'enceinte principale, conduisant à l'oxydation de cette couche du métal M par l'électrolyte et donc à la production d'hydrogène gazeux.

Par successivement, on entend qu'un cycle d'utilisation du réacteur électrochimique comporte au moins une phase d'attente et une phase de production, et qu'il peut y avoir plusieurs cycles d'utilisation qui se suivent.

Selon l'invention, le dispositif de stockage et de fourniture d'hydrogène comporte :

⚬ une enceinte secondaire, raccordée fluidiquement à l'enceinte principale, et adaptée à recevoir l'électrolyte lors d'au moins la phase d'attente ;
⚬ une électrode négative et une électrode positive, et une alimentation électrique connectée aux électrodes, le dispositif de commande étant adapté à présenter : une configuration de contact lors d'une phase de préparation, à la suite d'une phase de production, dans laquelle il y a contact physique entre l'électrolyte et les électrodes, l'alimentation électrique étant activée, conduisant à un dépôt de la couche de métal M en phase solide sur l'électrode négative et à une production d'oxygène gazeux à l'électrode positive, la couche de métal M ainsi formée étant destinée à être oxydée par l'électrolyte lors d'une phase de production ultérieure.

Les électrodes négative et positive sont situées : soit dans l'enceinte principale ; soit dans une enceinte intermédiaire raccordée fluidiquement à l'enceinte secondaire, le dispositif de commande étant alors adapté à déplacer la couche de métal M de l'enceinte intermédiaire à la suite de la phase de préparation, dans l'enceinte principale pour la phase de production.

Certains aspects préférés, mais non limitatifs de ce générateur électrique à hydrogène sont les suivants.

L'enceinte principale et l'enceinte secondaire peuvent être raccordées l'une à l'autre par un circuit de recirculation de l'électrolyte.

L'électrolyte peut présenter un volume supérieur à celui de l'enceinte principale et inférieur ou égal à celui de l'enceinte secondaire. Il peut ainsi, lors d'une phase de production, remplir entièrement l'enceinte principale et une partie de l'enceinte secondaire.

De même, dans le cas où les électrodes négative et positive sont situées dans l'enceinte intermédiaire, l'électrolyte peut présenter un volume supérieur à celui de l'enceinte intermédiaire et inférieur ou égal à celui de l'enceinte secondaire. Il peut ainsi, lors d'une phase de préparation, remplir entièrement l'enceinte intermédiaire et une partie de l'enceinte secondaire.

L'enceinte secondaire peut être située au-dessus de l'enceinte principale, le circuit de recirculation comportant des conduits d'évacuation et de recirculation, le conduit d'évacuation débouchant sur un port supérieur de l'enceinte principale et le conduit de recirculation débouchant sur un port inférieur de l'enceinte secondaire.

Le dispositif de stockage et de fourniture d'hydrogène peut être adapté à déplacer, lors de la phase de production, au moins une partie de l'électrolyte par gravité dans l'enceinte principale, pour venir au contact de la couche de métal M en phase solide.

L'enceinte secondaire peut être située au-dessus de l'enceinte intermédiaire et de l'enceinte principale, et peut être raccordée : à l'enceinte intermédiaire par un conduit d'évacuation et un conduit de recirculation, le conduit d'évacuation débouchant sur un port supérieur de l'enceinte intermédiaire et le conduit de recirculation débouchant sur un port inférieur de l'enceinte secondaire de manière à permettre une recirculation de l'électrolyte entre les enceintes secondaire et intermédiaire lors de la phase de préparation ; et à l'enceinte principale par un conduit d'évacuation et un conduit de recirculation, le conduit d'évacuation débouchant sur un port supérieur de l'enceinte principale et le conduit de recirculation débouchant sur un port inférieur de l'enceinte secondaire de manière à permettre une recirculation de l'électrolyte entre les enceintes secondaire et principale lors de la phase de production d'énergie électrique.

Le dispositif de stockage et de fourniture peut comporter un conduit de transfert raccordant l'enceinte intermédiaire et l'enceinte secondaire, et débouchant sur un port inférieur de l'enceinte intermédiaire.

L'invention porte également sur un générateur électrique à hydrogène, destiné à produire de l'énergie électrique à partir d'hydrogène gazeux, et comportant : un réacteur électrochimique selon l'une quelconque des caractéristiques précédentes ; et un moteur à hydrogène, adapté à produire de l'énergie électrique à partir de l'hydrogène gazeux fourni par le dispositif de stockage et **de fourniture** du réacteur électrochimique, comportant un collecteur d'entrée pour recevoir l'hydrogène, raccordé à l'enceinte principale.

Le moteur à hydrogène peut être raccordé à l'enceinte principale via l'enceinte secondaire.

L'invention porte également sur un procédé de production d'hydrogène gazeux par un réacteur électrochimique selon l'une quelconque des caractéristiques précédentes, comportant les étapes suivantes :

⚬ lors de la phase d'attente, séparation physique de l'électrolyte et de la couche de métal M solide, par le dispositif de commande, de manière à présenter la configuration de retrait ; puis

∘ lors de la phase de production, mise au contact de l'électrolyte et de la couche de métal M en phase solide dans l'enceinte principale, par le dispositif de commande, conduisant à l'oxydation de cette couche du métal M en phase solide par l'électrolyte et donc à la production d'hydrogène gazeux ; puis

∘ lors de la phase de préparation, mise en contact de l'électrolyte avec les électrodes négative et positive, l'alimentation électrique étant activée, conduisant à un dépôt de la couche de métal M en phase solide sur l'électrode négative et à une production d'oxygène gazeux à l'électrode positive. Cette phase de préparation peut être suivie d'un réassort (ajout) d'eau liquide dans l'électrolyte, pour compenser l'eau consommée lors de cette réaction électrochimique de dépôt.

Le procédé peut comporter en outre une nouvelle phase d'attente entre les phases de production et de préparation.

L'invention porte également sur un procédé de production d'énergie électrique par le générateur électrique à hydrogène selon l'une quelconque des caractéristiques précédentes, comportant :

∘ lors de la phase d'attente, séparation physique de l'électrolyte et de la couche de métal M solide, par le dispositif de commande, de manière à présenter la configuration de retrait ; puis

∘ lors de la phase de production, mise au contact de l'électrolyte et de la couche de métal M en phase solide dans l'enceinte principale, par le dispositif de commande, conduisant à l'oxydation de cette couche du métal M en phase solide par l'électrolyte et donc à la production d'hydrogène gazeux, lequel est fourni au moteur à hydrogène, qui produit alors de l'énergie électrique ; puis

∘ lors de la phase de préparation, mise en contact de l'électrolyte avec les électrodes négative et positive, l'alimentation électrique étant activée, conduisant à un dépôt de la couche de métal M en phase solide sur l'électrode négative et à une production d'oxygène gazeux à l'électrode positive.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

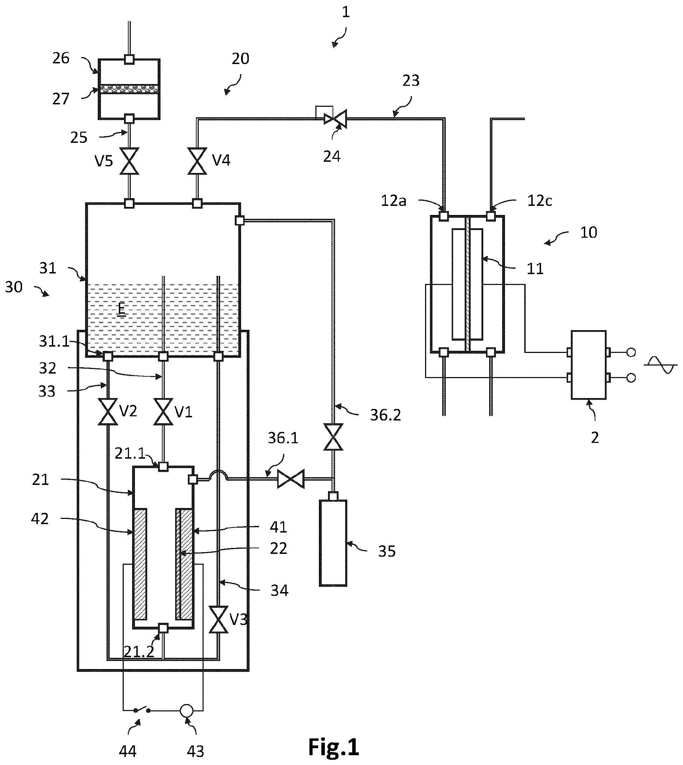

la figure 1 est une vue schématique et partielle d'un générateur électrique à hydrogène selon un premier mode de réalisation, dans lequel le dispositif de stockage et de fourniture d'hydrogène du réacteur électrochimique présente une configuration dite de dénoyage où une même enceinte est le lieu de la réaction électrochimique, dite d'attaque, de production d'hydrogène gazeux, et celui de la réaction électrochimique, dite de dépôt, de formation d'une couche de métal M solide ;

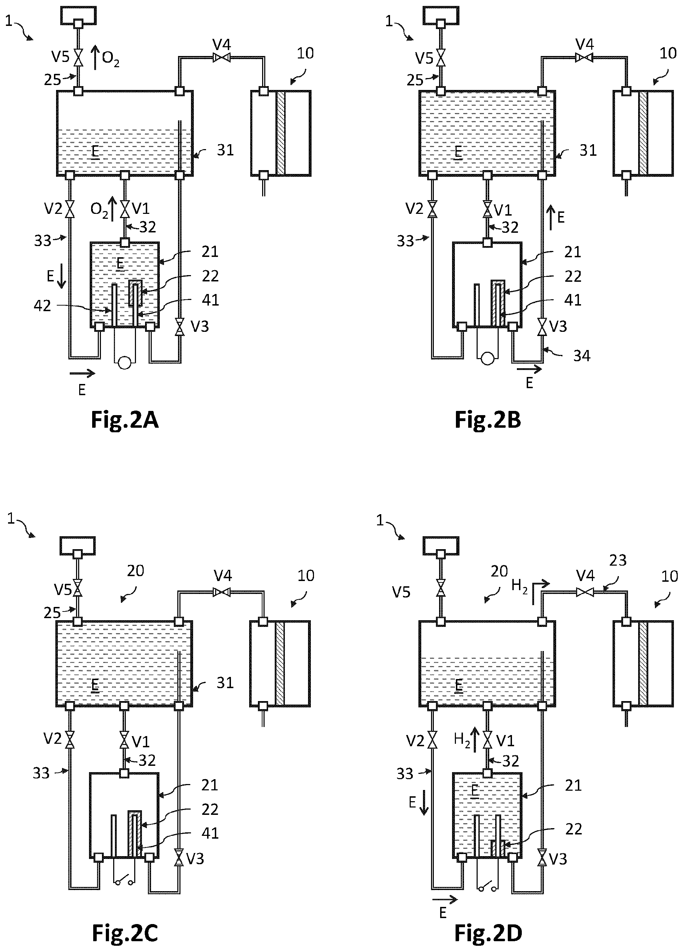

les figures 2A à 2D sont des vues schématiques et partielles du générateur électrique à hydrogène selon le premier mode de réalisation, illustrant différentes phases de son fonctionnement d'un cycle de fonctionnement, à savoir :

- une phase de préparation (fig.2A et fig.2B) comportant une étape de dépôt (fig.2A) puis de transfert fluidique (fig.2B) ;
- une phase d'attente (fig.2C) ; puis
- une phase de production d'hydrogène gazeux (fig.2D) ;

la figure 3 est une vue schématique et partielle d'un générateur électrique à hydrogène selon une variante du premier mode de réalisation, dans laquelle l'enceinte secondaire n'est pas disposée au-dessus de l'enceinte principale, mais à côté de celle-ci (latéralement) ;

la figure 4 est une vue schématique et partielle d'un générateur électrique à hydrogène selon un deuxième mode de réalisation, dans lequel le dispositif de stockage et de fourniture d'hydrogène présente une configuration dite à couche de métal M mobile, où la réaction électrochimique d'attaque (production d'hydrogène gazeux) a lieu dans une enceinte principale, et où la réaction électrochimique de dépôt (formation d'une couche de métal M solide) a lieu dans une autre enceinte dite intermédiaire ;

les figures 5A à 5D sont des vues schématiques et partielles d'un générateur électrique à hydrogène selon le deuxième mode de réalisation, illustrant différentes phases d'un cycle d'utilisation, à savoir :

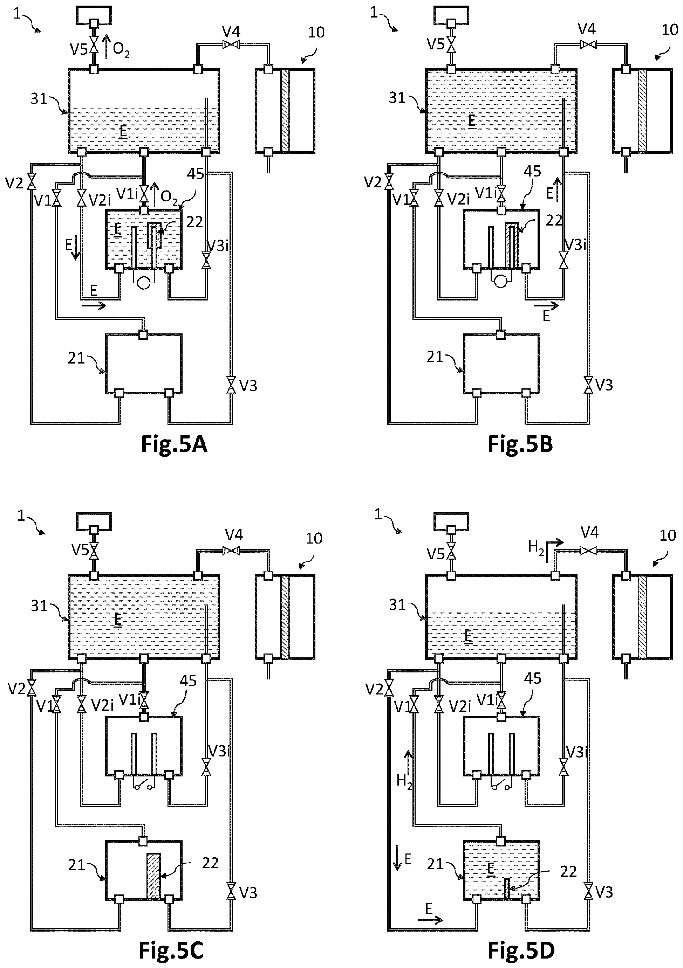

- la phase de préparation (fig.5A et fig.5B) ;
- la phase d'attente (fig.5C) ; et
- la phase de production d'hydrogène gazeux (fig.5D).

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un réacteur électrochimique adapté à fournir de l'hydrogène gazeux à la demande. Il comporte un dispositif adapté à stocker l'hydrogène sous une forme non gazeuse puis à la fournir sous une forme gazeuse. Elle trouve une application notamment dans le cadre d'un générateur électrique à hydrogène, c'est-à-dire un système de production d'énergie électrique comportant d'une part un moteur à hydrogène adapté à produire l'énergie électrique à partir d'hydrogène gazeux, et d'autre part le réacteur électrochimique comportant le dispositif de stockage et de fourniture d'hydrogène.

Un tel générateur électrique à hydrogène est notamment adapté à fonctionner comme un groupe électrogène, c'est-à-dire comme un système autonome pouvant rester en attente en l'absence de besoin en électricité par un équipement consommateur (bâtiment, systèmes informatiques...), et d'être activé et de produire de l'énergie électrique pour cet équipement consommateur. On comprend alors que le réacteur électrochimique doit être en mesure de stocker de l'hydrogène sur des temps qui peuvent être longs (par exemple de l'ordre de la semaine ou des mois), avec des risques réduits en termes de sécurité.

Autrement dit, le réacteur électrochimique présente plusieurs phases de fonctionnement lors d'un cycle d'utilisation, dont les phases principales suivantes :

- une phase d'attente, dans laquelle il ne produit pas d'hydrogène gazeux, l'hydrogène étant alors stocké sous une forme non gazeuse par le dispositif de stockage et de fourniture, ici sous la forme électrochimique d'ions $H^+$ ou de molécules d'eau $H_2O$ présents dans un électrolyte liquide aqueux ;
- une phase de production d'hydrogène gazeux (également appelée phase d'attaque), dans laquelle le dispositif de stockage et de fourniture fournit l'hydrogène gazeux, par exemple ici au moteur à hydrogène qui produit alors de l'énergie électrique pour un équipement consommateur ;
- une phase de préparation (également appelée phase de dépôt), dans laquelle le dispositif de stockage et de fourniture produit une couche de métal M solide qui pourra être oxydée lors d'une phase d'attaque ultérieure. Cette phase de dépôt peut être suivie d'une phase d'attente d'un nouveau cycle d'utilisation du réacteur électrochimique.

D'une manière générale, un moteur à hydrogène est ici un système produisant de l'énergie électrique à partir d'hydrogène gazeux. Il peut s'agir d'une pile à combustible, par exemple de type PEMFC ou SOFC, ou d'un moteur à combustion interne (par exemple, turbine à hydrogène ou moteur Wankel). Dans la suite de la description, et à titre purement illustratif, le moteur à hydrogène est une pile à combustible.

Selon l'invention, le dispositif de stockage et de fourniture du réacteur électrochimique comporte :

- une couche d'un métal M en phase solde d'un couple redox $M^{n+}/M$, et un électrolyte liquide aqueux adapté à oxyder le métal M solide, conduisant à la production d'hydrogène gazeux ;
- une enceinte principale, également appelée enceinte d'attaque, comportant un port de sortie pour fournir de l'hydrogène gazeux, et adaptée à recevoir l'électrolyte et la couche du métal M solide ;
- une enceinte secondaire, également appelée enceinte de stockage, raccordée fluidiquement à l'enceinte principale, et adaptée à recevoir l'électrolyte lors d'au moins la phase d'attente ;
- une électrode négative et une électrode positive, et une alimentation électrique connectée aux électrodes. Les électrodes négative et positive sont situées : soit dans l'enceinte principale ; soit dans une enceinte intermédiaire raccordée fluidiquement à l'enceinte secondaire.

Le réacteur électrochimique comporte également un dispositif de commande, adapté à assurer un déplacement relatif entre l'électrolyte et la couche de métal M, de manière à pouvoir présenter au moins les configurations distinctes suivantes :

- une configuration dite de retrait lors de la phase d'attente, dans laquelle il y a une séparation physique entre l'électrolyte et la couche du métal M ;
- une configuration dite de contact lors de la phase de production d'hydrogène gazeux, dans laquelle il y a contact physique entre l'électrolyte et la couche du métal M dans l'enceinte principale, conduisant à l'oxydation de la couche du métal M par l'électrolyte et donc à une production d'hydrogène gazeux ;
- une configuration de contact lors d'une phase de préparation, à la suite d'une phase de production, dans laquelle il y a contact physique entre l'électrolyte et les électrodes, l'alimentation électrique étant activée, conduisant à un dépôt de la couche de métal M en phase solide sur l'électrode négative et à une production d'oxygène gazeux à l'électrode positive, la couche de métal M ainsi formée étant destinée à être oxydée par l'électrolyte lors d'une phase de production ultérieure.

Notons que l'oxydation de la couche de métal M par l'électrolyte correspond, de manière équivalente, à une réduction de l'électrolyte par le métal M.

Comme détaillé par la suite, le réacteur électrochimique présente, lors d'un cycle d'utilisation, une phase de préparation, effectuée par exemple avant la toute première phase d'attente (la phase de préparation étant alors une phase initiale), ou effectuée après chaque phase de production d'hydrogène gazeux, au cours de laquelle le dispositif de stockage et de fourniture effectue une étape de dépôt d'une couche de métal M (une première couche si la phase de préparation est une phase initiale, ou une nouvelle couche s'il s'agit d'une phase supplémentaire), puis une étape de déplacement relatif pour séparer physiquement l'électrolyte et la couche de métal M.

Dans la suite de la description, le réacteur électrochimique est présenté dans le cadre d'un générateur électrique à hydrogène. Il s'agit d'un exemple purement illustratif, dans la mesure où le réacteur électrochimique peut fournir de l'hydrogène à la demande dans le cadre de toute sorte d'applications.

La figure 1 est une vue schématique et partielle d'un réacteur électrochimique 1 selon un mode de réalisation, ici dans le cadre d'un générateur électrique à hydrogène, permettant de produire de l'énergie électrique pour un équipement consommateur (non représenté).

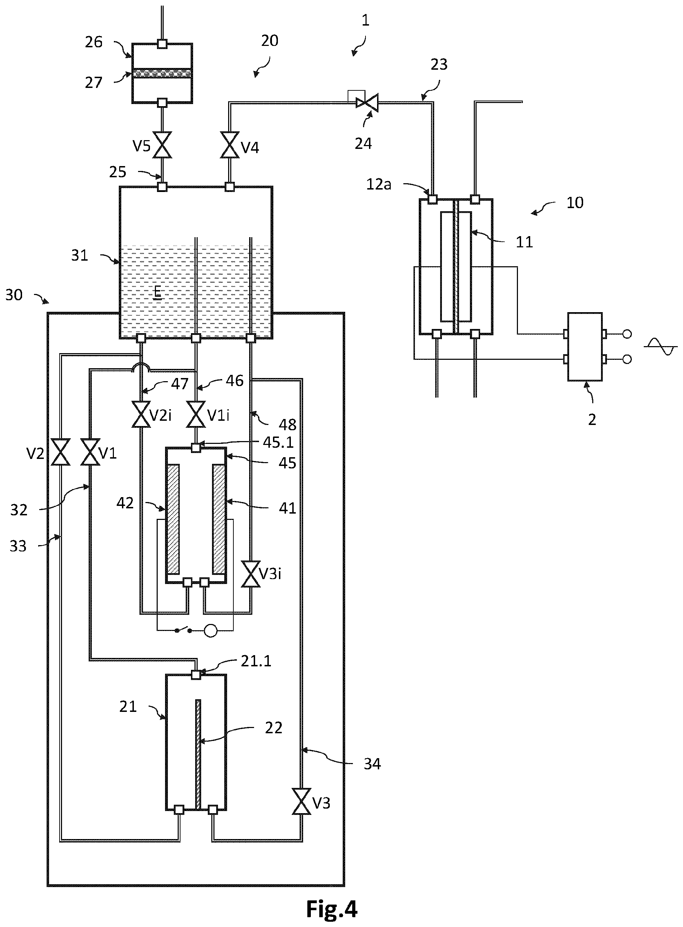

Dans cet exemple, l'enceinte principale 21 d'attaque loge les électrodes 41 et 42. Elle est donc également l'enceinte où a lieu la réaction électrochimique de formation du métal M solide lors de la phase de préparation. L'enceinte principale 21 est donc une enceinte d'attaque et de dépôt (contrairement à la variante de la fig.4 où il y a une enceinte d'attaque 21 et une enceinte de dépôt 45).

Le générateur électrique à hydrogène comporte le réacteur électrochimique 1 ayant un dispositif 20 de stockage et de fourniture d'hydrogène, et ici une pile à combustible 10, et plus précisément ici une pile à hydrogène à membrane échangeuse de protons (PEM pour *Proton Exchange Membrane*, en anglais).

La pile à combustible 10 comporte au moins une cellule électrochimique, et ici un empilement de cellules électrochimiques (non représentées). Chaque cellule comporte une anode et une cathode séparées l'une de l'autre par une membrane électrolytique, cet ensemble formant un assemblage membrane électrodes 11 (AME). L'anode, la membrane et la cathode sont des éléments classiques connus de l'homme du métier et ne sont donc pas décrites en détail. La pile à combustible 10 est alimentée en hydrogène côté anode et en air contenant de l'oxygène côté cathode (ou éventuellement en oxygène pur).

Chaque assemblage membrane électrodes 11 est séparé de celui des cellules adjacentes par des plaques bipolaires (non représentées), adaptées à amener les espèces réactives à l'anode d'une première cellule d'une part et à la cathode d'une cellule adjacente d'autre part, et à évacuer les produits issus des réactions électrochimiques et les espèces non réactives, ainsi qu'à transmettre le courant électrique entre les cellules. Elle peut également assurer l'écoulement d'un fluide caloporteur entre les cellules de manière à permettre l'évacuation de la chaleur produite.

La pile à combustible 10 comporte deux collecteurs d'entrée distincts, l'un anodique 12a et l'autre cathodique 12c, destinés à assurer l'injection des gaz d'alimentation jusqu'aux cellules, et deux collecteurs de sorties distincts correspondants, permettant d'évacuer les gaz d'alimentation n'ayant pas réagi et des éventuelles espèces non réactives hors de la pile à combustible 10. Ainsi, l'hydrogène est injecté dans la pile à combustible 10 par le collecteur d'entrée anodique 12a qui l'amène jusqu'aux cellules électrochimiques. L'hydrogène n'ayant pas réagi et les espèces non réactives, par exemple de l'azote, sont ensuite évacués par le collecteur de sortie.

La pile à combustible 10 est adaptée à fournir de l'énergie électrique à un équipement consommateur, par exemple à un équipement stationnaire tel qu'un bâtiment (hôpital, école, centre informatique...) voire à un équipement mobile tel qu'un véhicule. Elle peut être connectée à un convertisseur AC/DC 2.

La pile à combustible 10 est destinée à être alimentée en hydrogène, non pas à partir d'un réservoir d'hydrogène stocké à haute pression comme des bouteilles à 200 bar comme dans l'art antérieur mentionné précédemment, mais à partir du dispositif 20 de stockage et de fourniture d'hydrogène selon l'invention. Celui-ci est raccordé au collecteur d'entrée anodique 12a par un conduit d'alimentation 23. L'hydrogène gazeux fourni à la pile à combustible 10 peut présenter une pression atmosphérique ou une pression de quelques bars, par exemple de l'ordre de 3 bar.

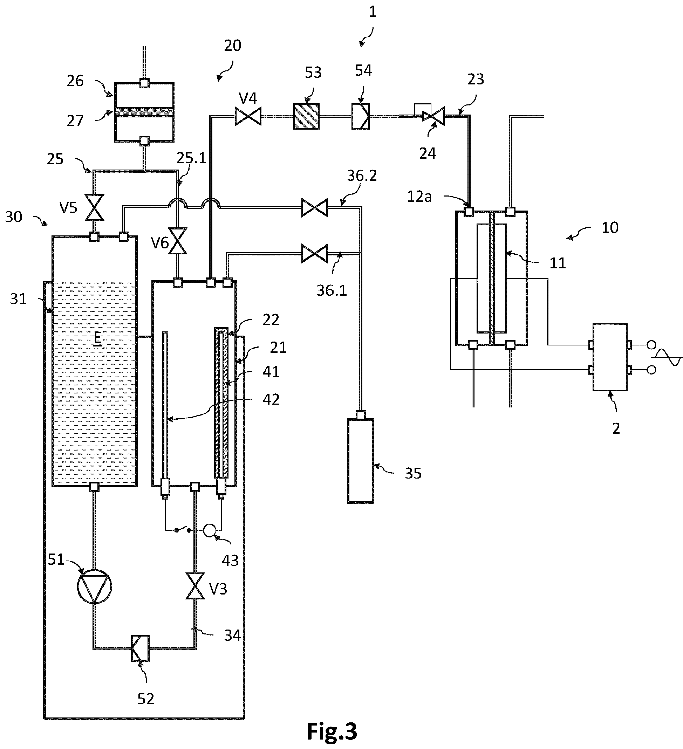

Un régulateur de pression 24, ici un déverseur, peut être disposé sur le conduit d'alimentation 23, entre le dispositif de stockage et de fourniture 20 et le collecteur d'entrée anodique 12a. Il est adapté à maintenir une pression aval sensiblement constante, inférieure ici à la pression de l'hydrogène généré dans l'enceinte principale 21 du dispositif de stockage et de fourniture 20, et indépendante des éventuelles variations de pression. La pression aval correspond à la pression de l'hydrogène en sortie du déverseur 24. La valeur de la pression aval est sensiblement égale à la valeur de consigne du déverseur 24, cette valeur pouvant être pilotée ou non. D'autres éléments fluidiques peuvent être disposés sur le conduit d'alimentation 23, comme décrit plus loin en référence à la fig.3.

Notons que la pile à combustible 10 peut également comporter une boucle de recirculation (non représentée) formée d'une part d'un éjecteur disposé sur le conduit d'alimentation 23, entre le déverseur 24 et le collecteur d'entrée anodique 12a, et d'autre part d'une ligne fluidique de recirculation reliant fluidiquement le collecteur de sortie anodique 12a à une entrée dite secondaire de l'éjecteur. Cette configuration est connue de l'homme du métier et n'est pas décrite plus en détail.

Le réacteur électrochimique 1 comporte le dispositif 20 de stockage et de fourniture d'hydrogène et le dispositif de commande 30. Le dispositif 20 de stockage/fourniture est ainsi adapté à stocker de l'hydrogène, non pas sous forme gazeuse et à haute pression, mais ici sous la forme chimique d'ions $H^+$ voire de molécules d'eau $H_2O$, présents dans un électrolyte E liquide aqueux, puis à fournir de l'hydrogène gazeux à la pile à combustible 10, cet hydrogène gazeux ayant été produit à partir d'une réaction électrochimique d'oxydation d'une couche du réducteur solide M du couple redox $M^{n+}/M$ appelé intermédiaire redox, où M est un métal. Le dispositif de commande est adapté à assurer un déplacement relatif entre l'électrolyte E et la couche 22 de métal M en phase solide.

Ainsi, le dispositif 20 de stockage et de fourniture comporte :

- une couche 22 de métal M en phase solide d'un couple redox $M^{n+}/M$ et un électrolyte E liquide aqueux adapté à oxyder la couche 22 d'un métal M, conduisant à la production d'hydrogène gazeux ;
- une enceinte principale 21 (enceinte d'attaque), raccordée ici au collecteur d'entrée anodique 12a pour lui fournir de l'hydrogène gazeux, et destinée à recevoir l'électrolyte E et la couche 22 du métal M en phase solide ;
- une enceinte secondaire 31 (enceinte de stockage), raccordée fluidiquement à l'enceinte principale 21, et adaptée à recevoir l'électrolyte (E) lors d'au moins la phase d'attente.

Le dispositif de commande 30 peut présenter les configurations distinctes suivantes :

- une configuration de retrait lors de la phase d'attente, dans laquelle il y a une séparation physique entre l'électrolyte E et la couche 22 du métal M en phase solide, l'électrolyte E étant alors situé entièrement dans l'enceinte secondaire 31 de stockage ; et
- une configuration de contact lors de la phase de production, dans laquelle il y a contact physique entre l'électrolyte E et la couche 22 du métal M en phase solide dans l'enceinte principale 21 d'attaque, conduisant à l'oxydation de cette couche 22 du métal M et donc à la production d'hydrogène gazeux ;
- une autre configuration de contact lors d'une phase de préparation, à la suite d'une phase de production, dans laquelle il y a contact physique entre l'électrolyte E et les électrodes 41, 42, l'alimentation électrique 43 étant activée, conduisant à un dépôt de la couche 22 de métal M en phase solide sur l'électrode négative 41 et à une production d'oxygène gazeux à l'électrode positive 42. La couche 22 de métal M ainsi formée est destinée à être oxydée lors d'une phase de production ultérieure. Ce contact peut lieu ici dans l'enceinte principale 21.

Autrement dit, lors de la phase d'attente, c'est-à-dire lorsque le réacteur électrochimique 1 n'est pas activé et ne produit pas d'hydrogène gazeux, la couche 22 du métal M et l'électrolyte E sont séparés physiquement (absence de contact physique) l'un de l'autre, de manière à éviter l'oxydation de la couche 22 du métal M et donc la production d'hydrogène gazeux. Cette mise en contact mutuel est effectuée lorsque le réacteur électrochimique 1 est activé et correspond à la phase de production d'hydrogène gazeux.

L'enceinte principale 21 d'attaque est formée d'une paroi délimitant un espace intérieur. Il s'agit du lieu de la réaction électrochimique d'oxydation par l'électrolyte E de la couche 22 de métal M en phase solide. L'enceinte principale 21 d'attaque est réalisée en un matériau résistant à la corrosion. Elle est raccordée dans cet exemple à la pile à combustible 10 pour lui fournir de l'hydrogène gazeux. Dans cet exemple, l'enceinte principale 21 est raccordée à la pile à combustible 10 de manière indirecte, via l'enceinte secondaire 31 de stockage. En variante, elle peut être raccordée directement à la pile à combustible 10, comme décrit plus loin en référence à la fig.3.

L'électrolyte E est une solution aqueuse ionique adaptée à oxyder une couche 22 du métal M en phase solide de l'intermédiaire redox $M^{n+}/M$ conduisant à la production d'hydrogène gazeux. Il peut s'agir d'une solution acide à base de $H_2SO_4$, et contient une prédominance d'ions $H^+$ lorsque l'électrolyte E est en phase d'attente. Les ions $H^+$ sont alors la forme chimique dans laquelle l'hydrogène est stocké lors de la phase d'attente. En variante, l'électrolyte E peut cependant être basique, l'hydrogène étant alors stocké lors de la phase d'attente sous la forme chimique de molécules d'eau $H_2O$.

Comme détaillé plus loin, l'électrolyte E peut initialement contenir des ions $M^{n+}$ dont la concentration (en grammes par litre d'électrolyte) dépend de la quantité d'hydrogène gazeux à produire, et peut être comprise, à titre d'exemple, entre 10 et 100g/L environ. La concentration ici en acide sulfurique peut être comprise, à titre d'exemple, entre 25 et 150g/L environ, par exemple égale à 80g/L.

L'intermédiaire redox $M^{n+}/M$, où l'élément chimique M est un métal, peut être le couple $Zn^{2+}/Zn$. D'autres intermédiaires redox peuvent cependant être utilisés, comme par exemple le nickel Ni ou le manganèse Mn, entre autres. Des exemples sont notamment donnés dans le document WO2019/193281. Comme détaillé plus loin, l'électrolyte E peut initialement comporter des ions $M^{n+}$ pour ensuite effectuer, avant la phase d'attente, une réaction électrochimique de dépôt de la couche 22 du métal M solide sur l'électrode négative 41 (et la formation d'ions $H^+$ dans le cas d'un électrolyte acide, ou de molécules d'eau $H_2O$ dans le cas d'un électrolyte basique).

Le dispositif 20 de stockage et de fourniture comporte des électrodes 41, 42, connectées à une alimentation électrique 43, voire à une charge électrique (ou ici être connectées au convertisseur AC/DC). Ces électrodes 41, 42, associées à l'alimentation électrique 43, permettent de former une première couche 22, ou une nouvelle couche 22, du métal M en phase solide.

Dans cet exemple, cette étape de formation de la couche 22 de métal M en phase solide (étape de dépôt) est effectuée dans l'enceinte principale 21, qui est alors une enceinte d'attaque et de dépôt. Aussi, les électrodes 41, 42 sont disposées dans l'enceinte principale 21, laquelle est alors, non seulement le lieu de la réaction électrochimique de l'oxydation de la couche de métal M et donc de la production d'hydrogène gazeux (réaction d'attaque), mais également le lieu de la réaction électrochimique de dépôt de la couche 22 de métal M (réaction de dépôt). En variante cependant, comme indiqué plus loin en référence à la fig.4, cette étape de dépôt peut être effectuée dans une autre enceinte que l'enceinte principale 21 d'attaque, à savoir dans l'enceinte intermédiaire 45 dite de dépôt.

Les électrodes 41, 42 sont réalisées en un matériau qui dépend de la nature de l'électrolyte E et de l'intermédiaire redox. A titre d'exemple, pour un électrolyte en une solution aqueuse acide à base de $H_2SO_4$ et un intermédiaire redox $Zn^{2+}/Zn$, l'électrode négative 41 (électrode à zinc) peut être réalisée à base d'aluminium et l'électrode positive 42 (électrode à oxygène) peut être réalisée à base de plomb. D'autres matériaux peuvent être utilisés.

L'alimentation électrique 43 est connectée aux électrodes positive 42 et négative 41, et est adaptée à leur appliquer une différence de potentiel électrique lors de cette étape de dépôt. Un interrupteur 44 est prévu pour désactiver l'alimentation électrique lors de la phase d'attente et lors de la phase de production d'hydrogène gazeux.

Notons que l'utilisation de trois électrodes distinctes est possible, avec par exemple une première électrode, dite ici de zinc, sur laquelle a lieu le dépôt du réducteur solide, réalisée par exemple en aluminium, une deuxième électrode, dite à oxygène, au niveau de laquelle est produit l'oxygène, réalisée par exemple en un alliage de plomb, et une troisième électrode, dite à hydrogène, au niveau de laquelle est produit l'hydrogène, réalisée par exemple en platine.

Comme détaillé par la suite, le dispositif de commande 30 peut notamment présenter deux modes de réalisation différents. Dans le premier mode de réalisation (cf. fig.1, fig. 2A à 2D et fig.3), le dispositif de commande 30 est dit à dénoyage, dans la mesure où la couche 22 de métal M reste située dans l'enceinte principale 31 lors des phases d'attente et de production, alors que l'électrolyte E est écarté ou mise au contact de la couche 22 de métal M (une même enceinte 21 pour les réactions d'attaque et de dépôt). En revanche, dans le deuxième mode de réalisation (cf. fig.4 et 5A à 5D), le dispositif de commande 30 est dit à couche 22 de métal M mobile, dans la mesure où la couche 22 de métal M est déplacée (mécaniquement ou manuellement) entre les phases d'attente et de production (deux enceintes distinctes pour les réactions d'attaque et de dépôt).

Dans ce premier mode de réalisation, le dispositif de commande 30 est à dénoyage, et comporte donc des éléments de transfert fluidique adaptés à transférer au moins en partie l'électrolyte E de l'enceinte secondaire 31 de stockage (qu'elle occupait lors de la phase d'attente) vers l'enceinte principale 21 d'attaque (pour la phase de production d'hydrogène), et inversement.

L'enceinte secondaire 31 de stockage est raccordée à l'enceinte principale 21 d'attaque par les éléments de transfert fluidique. Cette enceinte secondaire 31 permet de stocker temporairement l'électrolyte E hors de l'enceinte principale 21 lors de la phase d'attente, avant la phase de production d'hydrogène. Lors de la phase de production d'hydrogène, l'électrolyte E est réintroduit dans l'enceinte principale 21 d'attaque pour venir au contact de la couche 22 de métal M en phase solide et. L'enceinte secondaire 31 de stockage peut être réalisée en un matériau choisi pour résister à l'acide sulfurique de l'électrolyte E.

Notons que, d'une manière générale, différentes configurations sont évidemment possibles pour assurer le transfert fluidique de l'électrolyte E de l'une à l'autre des enceintes 21, 31, selon que le déplacement de l'électrolyte E est passif (gravitaire) ou contrôlé (pompe, injection d'un gaz sous pression...), et donc selon la disposition de l'enceinte secondaire 31 de stockage vis-à-vis de l'enceinte principale 21 d'attaque.

Ainsi, dans cet exemple de la fig.1, l'enceinte secondaire 31 de stockage est placée au-dessus de l'enceinte principale 21 d'attaque, le transfert fluidique de l'électrolyte E de l'enceinte principale 21 vers l'enceinte secondaire 31 pour se placer dans la configuration de retrait est ici un transfert assuré par la production d'oxygène gazeux lors d'une phase de préparation. Ce transfert peut être assisté par l'injection d'un gaz neutre (azote ou air) dans l'enceinte principale 21, voire peut être assisté au moyen d'une pompe (non représentée).

Dans ce cas, un conduit d'évacuation 32 assure le raccord fluidique entre un port supérieur 21.1 de l'enceinte principale 21 d'attaque et l'enceinte secondaire 31 de stockage, et est muni d'une vanne V1. Un conduit de transfert 34 assure le raccord fluidique entre un port inférieur 21.2 de l'enceinte principale 21 et l'enceinte secondaire 31, est muni d'une vanne V2. Enfin, un conduit de recirculation 33 assure le raccord fluidique entre l'enceinte principale 21 et un port inférieur 31.1 de l'enceinte secondaire 31. Les ports d'entrée/sortie peuvent évidemment être disposés différemment de l'agencement illustré sur la fig.1.

L'enceinte secondaire 31 de stockage est raccordée au collecteur d'entrée anodique 12a par un conduit d'alimentation 23 muni d'un déverseur 24, lequel assure la régulation de la pression de l'hydrogène gazeux à l'entrée de l'anode de la pile à combustible 10. De plus, l'enceinte secondaire 31 de stockage est ici raccordée à un dégazeur 26 à pression atmosphérique par un conduit d'évacuation 25 munie d'une vanne V5. Ce dégazeur 26 permet de diluer à l'air libre l'oxygène libéré puis, éventuellement, à le rejeter dans l'atmosphère. Il comporte ici un filtre 27 permettant de nettoyer l'oxygène de la brume d'acide (*mist*, en anglais) éventuellement présente, celle-ci étant formée de fines gouttelettes d'électrolyte, avant que l'oxygène soit rejeté dans l'atmosphère. Des ventilateurs (non représentés) peuvent être présents pour ventiler le dégazeur 26. Un capteur du taux d'hydrogène peut également être présent.

Dans le cas où le transfert fluidique de l'électrolyte E hors de l'enceinte principale 21 d'attaque est assisté ou assuré par l'injection d'un gaz neutre, une bouteille de gaz sous pression 35 est raccordée à un port supérieur de l'enceinte principale 21 par un conduit de raccord 36.1. Cette même bouteille (ou une autre) peut être raccordée par un conduit 36.2 à l'enceinte secondaire 31 de stockage pour assister le transfert de l'électrolyte E dans l'enceinte principale 21.

L'enceinte principale 21 et l'enceinte secondaire 31 de stockage sont ici avantageusement raccordées l'une à l'autre par un circuit de recirculation (conduits 32, 33), et l'électrolyte E présente un volume suffisant pour remplir l'enceinte principale 21 et une partie de l'enceinte secondaire 31 lors des phases d'attaque et de dépôt.

Il est alors possible d'effectuer une étape de production d'hydrogène gazeux (attaque), puis une étape de formation du métal M solide (dépôt), suivi d'un simple ajout d'eau dans l'électrolyte, puis une étape d'attente où l'hydrogène est stocké sous forme ionique et non pas gazeuse. Et ainsi de suite.

Les figures 2A à 2D illustrent, de manière schématique et partielle, un réacteur électrochimique 1, dans le cadre d'un générateur électrique à hydrogène, selon un mode de réalisation similaire à celui décrit sur la fig.1, lors de différentes étapes de son fonctionnement. Dans cet exemple, l'intermédiaire redox est le couple $Zn^{2+}/Zn$ et l'électrolyte est une solution liquide aqueuse et acide.

La fig.2A illustre le réacteur électrochimique 1, lors d'une première étape d'une phase initiale de préparation. Il s'agit ici d'effectuer le dépôt de la couche 22 de zinc solide (ici sur l'électrode négative 41) et de former des ions $H^+$ dans l'électrolyte E. Ces ions $H^+$ correspondent ainsi à la forme chimique de l'hydrogène stocké, ce qui permet d'écarter les risques en termes de sécurité (pas d'hydrogène gazeux stocké à haute pression).

Pour cela, l'électrolyte E contenant des ions $Zn^{2+}$ est placé dans l'enceinte principale 21 d'attaque. La concentration d'ions $Zn^{2+}$ dépend de la quantité d'hydrogène gazeux à produire. Notons que la quantité d'électrolyte E est telle qu'elle remplit l'enceinte principale 21 ainsi qu'une partie de l'enceinte secondaire 31. Lors de cette étape de dépôt, l'électrolyte E va circuler entre l'enceinte principale 21 d'attaque et l'enceinte secondaire 31 de stockage par les conduits d'évacuation 32 et de recirculation 33.

Pour cela, les vannes V1 (évacuation) et V2 (recirculation) sont ouvertes, et la vanne V3 (transfert) est fermée. La vanne V4 d'alimentation de la pile à combustible 10 est fermée, et la vanne V5 d'évacuation est ouverte. L'enceinte principale 21 d'attaque et l'enceinte secondaire 31 de stockage sont donc à la pression atmosphérique. Enfin, l'alimentation électrique 43 est activée pour appliquer une différence de potentiel électrique aux électrodes, ce qui initie la réaction électrochimique de dépôt du zinc.

Lors de cette étape de dépôt, on électrolyse l'électrolyte E pour réaliser le dépôt de zinc en phase solide sur l'électrode négative 41. Cette réaction électrochimique s'accompagne d'une production d'oxygène gazeux. Dans cet exemple, l'oxygène produit est évacué via les conduits 32 et 25, pour être dans l'air à pression atmosphérique par le dégazeur et nettoyé de la brume d'acide par le filtre, avant d'être rejeté dans l'atmosphère.

La réduction de l'oxydant de l'intermédiaire redox, ici des ions $Zn^{2+}$, a lieu à l'électrode négative 41 (cathode) conduisant au dépôt de la couche 22 de zinc en phase solide, et l'oxydation de l'eau et donc la production d'oxygène gazeux a lieu alors à l'électrode positive 42 (anode). Ces deux équations chimiques s'écrivent :

$$H_2O \rightarrow \frac{1}{2} O_2(g) + 2H^+ + 2e^-$$

$$Zn^{2+} + 2e^- \rightarrow Zn(s)$$

L'électrodéposition du zinc sur l'électrode négative 41 est une électrolyse du zinc. Elle provoque l'acidification de la solution électrolytique. Lors de cette étape de dépôt, il y a donc consommation d'eau et d'électricité. Ainsi, l'alimentation électrique génère une densité de courant i pendant une durée $\Delta t$ qui conduit au dépôt d'une masse $m_{Zn}$ de zinc en phase solide sur l'électrode négative 41. Il y a donc eu une diminution de la concentration d'ions $Zn^{2+}$ dans l'électrolyte.

Au cours de cette étape de dépôt, l'oxygène est évacué hors de l'enceinte principale 21 par le conduit d'évacuation 32, ce qui provoque une montée de l'électrolyte E dans le conduit d'évacuation 32 par extraction au gaz (*gas lift*, en anglais), et donc une recirculation de l'électrolyte E dans le conduit de recirculation 33, ce qui permet d'homogénéiser la concentration d'ions $Zn^{2+}$ au sein de l'électrolyte E. A la suite de la phase de dépôt, un réassort d'eau dans l'électrolyte E peut être effectué pour compenser l'eau consommée.

Au terme de cette première étape, la couche 22 de zinc en phase solide est donc formée à la surface de l'électrode négative 41. De plus, l'électrolyte E contient des ions $H^+$ qui correspondent à la forme chimique de l'hydrogène stocké. Il convient maintenant d'assurer un déplacement relatif entre l'électrolyte E et la couche 22 de zinc en phase solide pour se placer dans la configuration de retrait de la phase d'attente.

La fig.2B illustre le réacteur électrochimique 1, lors d'une deuxième étape de la phase initiale de préparation. Pour transférer l'électrolyte E hors de l'enceinte principale 21 (séparation physique avec la couche 22 de zinc en phase solide), on met ici à profit la production d'oxygène pour assurer ce transfert fluidique de l'électrolyte E. Cette étape est donc effectuée avant l'épuisement des ions $Zn^{2+}$ dans l'électrolyte E.

Pour cela, les vannes V1 (évacuation) et V2 (recirculation) sont fermées et la vanne V3 (transfert) est ouverte. L'alimentation électrique reste activée. L'oxygène produit à l'électrode positive reste localisé dans l'enceinte principale 21, et provoque le transfert de l'électrolyte E dans l'enceinte secondaire 31 via le conduit de transfert 34. Lorsque l'électrolyte E n'est plus au contact physique de la couche 22 de zinc en phase solide, l'alimentation électrique est désactivée et la vanne V3 est fermée.

La fig.2C illustre le réacteur électrochimique 1 lors de la phase d'attente. Dans cette configuration de retrait, le dispositif de commande assure la séparation physique de l'électrolyte E et de la couche 22 de zinc en phase solide, de sorte que le dispositif 20 de stockage et de fourniture ne produit pas d'hydrogène gazeux, et que la pile à combustible 10 ne produit alors pas d'énergie électrique.

La couche 22 de zinc en phase solide est située dans l'enceinte principale 21 d'attaque, et l'électrolyte E est situé dans l'enceinte secondaire 31 de stockage. Les vannes V1 et V2 sont fermées pour éviter un retour par gravité de l'électrolyte E dans l'enceinte principale 21, ainsi que la vanne V3. La vanne V4 est fermée pour isoler fluidiquement la pile à combustible 10, et la vanne V5 est également fermée pour éviter une éventuelle évaporation de l'électrolyte E. Le réacteur électrochimique 1 peut rester ainsi en phase d'attente sur des temps longs, et présente des risques réduits en termes de sécurité dans la mesure où l'hydrogène est stocké ici sous la forme d'ions $H^+$ dans l'électrolyte.

La fig.2D illustre le réacteur électrochimique 1 lors de la phase de production d'hydrogène gazeux. Dans cette configuration de contact, le dispositif de commande 30 assure la mise en contact physique de l'électrolyte E et de la couche 22 de zinc en phase solide, conduisant à l'oxydation de cette couche 22 du métal M en phase solide par l'électrolyte E et donc à la production d'hydrogène gazeux, lequel est fourni à la pile à combustible 10 qui produit alors de l'énergie électrique.

Pour cela, les vannes V1 et V2 sont ouvertes, et la vanne V4 est également ouverte. L'électrolyte E est transféré (ici en partie) dans l'enceinte principale 21, ici de manière passive, par gravité, et vient naturellement au contact de la couche 22 de zinc en phase solide.

Cette étape est un phénomène de pile électrochimique. Ont lieu alors l'oxydation du zinc solide ayant été déposé sur électrode négative (anode), ainsi que la réduction des protons et donc la production d'hydrogène gazeux. Cette réaction électrochimique a lieu de manière spontanée sans apport énergétique, et en particulier sans énergie électrique ou thermique, dans la mesure où le zinc n'est pas stable en milieu aqueux. Les équations chimiques s'écrivent :

$$2H^+ + 2e^- \rightarrow H_2(g)$$

$$Zn(s) \rightarrow Zn^{2+} + 2e^-$$

Ainsi, de l'hydrogène gazeux se forme dans l'enceinte principale 21 d'attaque, qui est transmis naturellement jusqu'à l'anode de la pile à combustible 10 via le conduit d'évacuation 32, l'enceinte secondaire 31 de stockage et le conduit d'alimentation 23. Le déverseur (cf. fig.1) permet ici de réguler la pression de l'hydrogène gazeux à l'entrée de la pile à combustible 10 à une valeur prédéfinie, par exemple égale à 3 bar environ.

Notons que l'hydrogène gazeux, en circulant dans le conduit d'évacuation 32, provoque la montée de l'électrolyte E par effet de *gas lift* comme précédemment avec la production d'oxygène gazeux. Il y a alors une recirculation de l'électrolyte E via le conduit de recirculation 33.

Le réacteur électrochimique 1 produit ainsi de l'hydrogène gazeux et le fournit à la pile à combustible 10. Celle-ci reçoit également de l'oxygène (air ou oxygène pur) à la cathode, et produit ainsi de l'énergie électrique. Celle-ci est transmise, via par exemple un convertisseur AC/DC (cf. fig.1) à l'équipement consommateur qui en a besoin. Notons que l'alimentation électrique reste désactivée, et qu'un courant électrique peut être collecté aux bornes des électrodes et transmis à l'équipement consommateur avec l'énergie électrique produite par la pile à combustible.

Au terme de cette phase de production d'hydrogène gazeux, le réacteur électrochimique 1 peut être 'préparé' à nouveau en effectuant la phase de préparation décrite précédemment en référence aux fig.2A et 2B. Il suffit alors d'activer l'alimentation électrique pour produire une nouvelle couche 22 de zinc en phase solide sur l'électrode négative 41, ainsi que des ions $H^+$ dans l'électrolyte E (fig.2A). La couche 22 de zinc en phase solide ainsi obtenue, l'électrolyte E est ensuite transféré hors de l'enceinte principale 21 d'attaque pour éviter tout contact physique avec la couche 22 de zinc en phase solide (fig.2B). Le réacteur électrochimique 1 est alors mis en configuration de retrait pour la phase d'attente.

Ainsi, le réacteur électrochimique 1 selon l'invention est en mesure de stocker de l'hydrogène sous une forme chimique d'ions $H^+$ (électrolyte acide) ou de molécules d'eau $H_2O$ (électrolyte basique) et non pas en phase gazeuse et à haute pression comme dans l'un des exemples de l'art antérieur mentionné précédemment. On réduit ainsi les risques en termes de sécurité. De plus, la réaction électrochimique de production d'hydrogène gazeux est initiée naturellement, par simple mise en contact de la couche 22 de métal M en phase solide avec l'électrolyte E, sans qu'il y ait une nécessité quelconque d'un apport en énergie thermique ou électrique. Enfin, après production d'hydrogène gazeux, le réacteur électrochimique est en mesure de produire une nouvelle couche de métal M en phase solide et de stocker de l'hydrogène sous sa forme chimique d'ions $H^+$ ou de molécules d'eau $H_2O$. On évite ainsi d'avoir à recharger manuellement le réacteur électrochimique en métal M solide et en électrolyte. Un simple réassort d'eau peut être prévu après l'étape de dépôt. Par ailleurs, dans cet exemple, le transfert de l'électrolyte E dans l'enceinte principale (pour la phase de production d'hydrogène gazeux) est effectué par simple gravité. De plus, une recirculation de l'électrolyte, lors de la production d'hydrogène gazeux, comme lors de la production d'oxygène gazeux, permet d'homogénéiser ses propriétés. Le cycle d'utilisation (production d'hydrogène gazeux ; formation du métal M solide ; attente avec l'hydrogène stocké sous forme non gazeuse) est rendu possible, que les électrodes soient situées dans l'enceinte principale 21 (fig.1 et 3) ou qu'elles soient situées dans l'enceinte intermédiaire 45 (fig.4).

La figure 3 est une vue schématique et partielle d'un réacteur électrochimique 1 selon une variante du premier mode de réalisation, dans laquelle l'enceinte secondaire 31 de stockage n'est pas située au-dessus de l'enceinte principale 21 d'attaque, mais est située à côté de celle-ci (latéralement).

Comme précédemment, l'enceinte secondaire 31 permet de loger l'électrolyte E lors de la phase d'attente, et des éléments fluidiques assurent le transfert de l'électrolyte E entre l'enceinte principale 21 d'attaque et l'enceinte secondaire 31 de stockage.

Ainsi, l'enceinte secondaire 31 de stockage est ici raccordée à l'enceinte principale 21 d'attaque par un conduit de transfert 34 reliant un port inférieur de l'enceinte principale 21 à un port inférieur de l'enceinte secondaire 31. D'une manière générale, un port inférieur, resp. supérieur, est une ouverture située dans une partie inférieure, resp. supérieure, de l'enceinte considérée. Le conduit de transfert 34 comporte ici une pompe double-sens 51 assurant le pompage de l'électrolyte E de l'enceinte principale 21 vers l'enceinte secondaire 31, et inversement. Une vanne V3 et un filtre 52 sont également présents.

L'enceinte secondaire 31 et l'enceinte principale 21 sont toutes deux raccordées au dégazeur 26, chacun par un conduit d'évacuation 25, 25.1 muni d'une vanne, respectivement V5, V6. Par ailleurs, une bouteille d'un gaz neutre 35 sous pression est ici raccordée à l'enceinte principale 21 comme à l'enceinte secondaire 31, pour assister le transfert fluidique d'une enceinte à l'autre.

Par ailleurs, le conduit d'alimentation 23 est ici équipé d'un déflecteur 53 (également appelé démisteur) qui permet de supprimer la brume acide éventuellement présente, d'une vanne V4 et d'un filtre 54. Ces éléments fluidiques peuvent, bien entendu, équiper le conduit d'alimentation du générateur électrique du premier mode de réalisation (fig.1.).

En fonctionnement, le réacteur électrochimique 1 comporte une phase de préparation, dans laquelle le dispositif de commande 30 place au moins une partie de l'électrolyte E dans l'enceinte principale 21, au contact des électrodes 41, 42, et active l'alimentation électrique 43 pour produire la couche 22 de métal M en phase solide sur l'électrode négative 41. Cette étape de dépôt s'accompagne d'une production d'oxygène gazeux à l'électrode positive 42 qui peut être évacué hors de cette enceinte 21 vers le dégazeur 26. La vanne d'alimentation V4 reste fermée.

A la fin de cette étape, soit au moyen de l'oxygène produit (comme décrit précédemment en référence à la fig.2B), et/ou au moyen de la pompe et/ou au moyen de l'injection d'un gaz neutre sous pression, l'électrolyte E présent dans l'enceinte principale 21 est évacué pour qu'il y ait une séparation physique avec la couche 22 du métal M en phase solide. La vanne de transfert V3 est fermée, ainsi que les vannes d'évacuation V5 et V6. Le générateur électrique se trouve alors en configuration de retrait pour la phase d'attente.

Lorsque la production d'hydrogène gazeux est requise, le dispositif de commande 30 effectue le transfert d'au moins une partie de l'électrolyte E dans l'enceinte principale 21 pour venir au contact de la couche 22 du métal M en phase solide. L'alimentation électrique 43 reste ici désactivée. En revanche, la vanne d'alimentation V4 est ouverte. Ce contact physique entre l'électrolyte E et la couche 22 du métal M en phase solide conduit à la production d'hydrogène gazeux, lequel est naturellement transmis à l'anode de la pile à combustible 10 au moyen du conduit d'alimentation 23.

Lorsque la phase de production d'hydrogène gazeux, comme mentionné précédemment en référence aux fig.2A à 2D, le réacteur électrochimique 1 peut procéder à une nouvelle phase de préparation. Ainsi, une nouvelle couche 22 de métal M est phase solide est obtenue, et l'électrolyte E est à nouveau rechargé en ions $H^+$ (électrolyte acide) ou en molécules d'eau $H_2O$ (électrolyte basique).

Notons que le réacteur électrochimique 1 peut comporter un circuit de recirculation, adapté à assurer la recirculation de l'électrolyte entre les deux enceintes 21 et 31 lors de l'étape de dépôt et/ou lors de l'étape d'attaque. Il peut alors comporter un conduit raccordant une partie basse de l'enceinte principale avec une partie haute de l'enceinte secondaire, et un conduit raccordant une partie haute de l'enceinte principale avec une partie basse de l'enceinte secondaire. Une pompe peut assurer la recirculation de l'électrolyte.

La figure 4 est une vue schématique et partielle d'un réacteur électrochimique 1 selon un deuxième mode de réalisation, dans lequel le dispositif de commande 30 permet le déplacement de la couche 22 de métal M en phase solide pour séparer celle-ci de l'électrolyte E lors de la phase d'attente.

De plus, dans cet exemple, le dispositif de stockage et de fourniture 20 comporte trois enceintes, à savoir une enceinte principale 21 d'attaque où a lieu l'oxydation de la couche 22 de métal M en phase solide par l'électrolyte E et donc la production d'hydrogène gazeux, une enceinte secondaire 31 de stockage pour loger l'électrolyte E en phase d'attente, et une enceinte intermédiaire 45 de dépôt où a lieu ici l'étape de dépôt de la couche 22 de métal M en phase solide sur l'électrode négative 41.

Plus précisément, l'enceinte intermédiaire 45 de dépôt est celle où sont situées les électrodes négative 41 et positive 42. Elle est raccordée à l'enceinte secondaire 31 de stockage par un conduit d'évacuation 46 au niveau d'un port supérieur 45.1, par un conduit de recirculation 47 et par un conduit de transfert 48. Ces différents conduits sont munis de vannes V1i, V2i, V3i.

L'enceinte principale 21 d'attaque est raccordée à l'enceinte secondaire 31 de stockage par un conduit d'évacuation 32 au niveau d'un port supérieur 21.1, par un conduit de recirculation 33 et par un conduit de transfert 34. Ces différents conduits 32, 33, 34 sont également munis de vannes V1, V2, V3.

L'enceinte secondaire 31 de stockage est ici raccordée au dégazeur 26 par un conduit d'évacuation 25, et à la pile à combustible 10 par un conduit d'alimentation 23.

Les figures 5A à 5D illustrent, de manière schématique et partielle, le réacteur électrochimique 1 selon un deuxième mode de réalisation similaire à celui décrit sur la fig.4, lors de différentes étapes de son fonctionnement. Comme précédemment, dans cet exemple, l'électrolyte E est acide et l'intermédiaire redox est le couple $Zn^{2+}/Zn$.

Les fig.5A et 5B illustrent une étape de préparation. Lors d'une première étape, la couche 22 du métal de zinc en phase solide est formée dans l'enceinte intermédiaire 45 de dépôt. Pour cela, l'alimentation électrique est activée et l'électrolyte E est mis au contact des électrodes. Les vannes V1i et V2i sont ouvertes, alors que les vannes V3i, V1, V2 et V3 restent fermées. De plus, la vanne V4 d'alimentation reste fermée et la vanne V5 d'évacuation est ouverte. Aussi, l'électrolyte E circule ici entre l'enceinte intermédiaire 45 de dépôt et l'enceinte secondaire 31 de stockage par effet de *gas lift* via le conduit de recirculation. La couche 22 de zinc en phase solide se forme sur l'électrode négative. L'oxygène produit s'évacue en passant par l'enceinte secondaire 31 de stockage et le dégazeur.

Lors de la deuxième étape, comme décrit en référence à la fig.2B, on transfère l'électrolyte E dans l'enceinte secondaire 31 de stockage pour la séparer physiquement de la couche 22 de zinc en phase solide. Les vannes V1i et V2i sont fermées et la vanne V3i est ouverte. L'oxygène produit dans l'enceinte intermédiaire 45 de dépôt permet d'évacuer l'électrolyte E. La vanne V3i est ensuite fermée.

La fig.5C illustre la phase d'attente. Le dispositif de commande 30 permet le transfert de la couche 22 de zinc en phase solide de l'enceinte intermédiaire 45 de dépôt pour la placer dans l'enceinte principale 21 d'attaque. Ce transfert peut être effectué manuellement ou mécaniquement. Le réacteur électrochimique 1 peut rester dans cette configuration le temps nécessaire.

Notons que la quantité de zinc en phase solide située dans l'enceinte principale 21 d'attaque peut être augmentée de manière à optimiser la quantité d'hydrogène gazeux produit ultérieurement. Pour cela, les étapes de formation de la couche 22 de zinc en phase solide (fig.5A), d'évacuation de l'électrolyte E (fig.5B) puis de transfert dans l'enceinte principale 21 de la couche 22 de zinc ainsi formé (fig.5C) sont effectuées à plusieurs reprises. Ainsi, la quantité de zinc en phase solide disposée dans l'enceinte principale 21 d'attaque peut être importante, tout comme l'est la quantité d'ions $H^+$ présents dans l'électrolyte E.

La fig.5D illustre la phase de production d'hydrogène gazeux. Les vannes V1 et V2 sont ouvertes, ainsi que la vanne V4 d'alimentation. L'électrolyte E descend naturellement dans l'enceinte principale 21 d'attaque et vient oxyder la couche 22 de zinc en phase solide, conduisant ainsi à la production d'hydrogène gazeux. Cet hydrogène gazeux est évacué par le conduit d'évacuation avec la vanne V1, l'enceinte secondaire 31 de stockage, le conduit d'alimentation avec la vanne V4, et vient alimenter la pile à combustible 10, qui produit alors de l'énergie électrique. Ce mouvement de l'hydrogène gazeux provoque une recirculation de l'électrolyte E entre l'enceinte principale 21 d'attaque et l'enceinte secondaire 31 de stockage, via les conduits d'évacuation et de recirculation, améliorant ainsi l'homogénéité de la concentration des ions $H^+$ et donc l'oxydation de la couche de zinc en phase solide.

Les avantages du réacteur électrochimique sont ici les mêmes que ceux du premier mode de réalisation. Comme indiqué précédemment, on peut toutefois augmenter la quantité de zinc en phase solide produit, et donc augmenter d'hydrogène gazeux produit.

Des modes de réalisation particuliers viennent d'être décrits. Différentes variantes et modifications apparaîtront à l'homme du métier.

Par ailleurs, en fonction des applications, le moteur à hydrogène peut ne pas être raccordé de manière permanente au dispositif de stockage et de fourniture d'hydrogène. Le raccordement peut être effectué lors de la phase de production d'hydrogène gazeux. D'autres équipements peuvent être raccordés au réacteur électrochimique 1, hors que des moteurs à hydrogène.

## Revendications

1. Réacteur électrochimique (1), destiné à produire de l'hydrogène gazeux à la demande, comportant :

    ◦ un dispositif de stockage et de fourniture d'hydrogène (20), adapté à stocker de l'hydrogène et à produire et fournir de l'hydrogène gazeux, comportant :

• une couche (22) d'un métal M en phase solide d'un couple redox $M^{n+}/M$, et un électrolyte (E) liquide aqueux adapté à oxyder la couche (22) du métal M en phase solide conduisant à la production d'hydrogène gazeux ;
• une enceinte principale (21), adaptée à recevoir l'électrolyte (E) et la couche (22) du métal M en phase solide, et comportant une sortie pour fournir l'hydrogène gazeux ;

◦ un dispositif de commande (30), adapté à assurer un déplacement relatif entre l'électrolyte (E) et la couche (22) de métal M, de manière à pouvoir présenter successivement au moins les deux configurations suivantes :

- une configuration de retrait lors d'une phase d'attente, où il y a une séparation physique entre l'électrolyte (E) et la couche (22) de métal M ; et
- une configuration de contact lors d'une phase de production, où il y a contact physique entre l'électrolyte (E) et la couche (22) de métal M dans l'enceinte principale (21), conduisant à l'oxydation de cette couche (22) du métal M par l'électrolyte (E) et donc à la production d'hydrogène gazeux ;

◦ **caractérisé en ce que** le dispositif de stockage et de fourniture (20) comporte :

• une enceinte secondaire (31), raccordée fluidiquement à l'enceinte principale (21), et adaptée à recevoir l'électrolyte (E) lors d'au moins la phase d'attente ;
• une électrode négative (41) et une électrode positive (42), et une alimentation électrique (43) connectée aux électrodes (41, 42), le dispositif de commande (30) étant adapté à présenter : une configuration de contact lors d'une phase de préparation, à la suite d'une phase de production, dans laquelle il y a contact physique entre l'électrolyte (E) et les électrodes (41, 42), l'alimentation électrique (43) étant activée, conduisant à un dépôt de la couche (22) de métal M en phase solide sur l'électrode négative (41) et à une production d'oxygène gazeux à l'électrode positive (42), la couche (22) de métal M ainsi formée étant destinée à être oxydée par l'électrolyte (E) lors d'une phase de production ultérieure,

- les électrodes négative et positive (41, 42) étant situées : soit dans l'enceinte principale (21) ; soit dans une enceinte intermédiaire (45) raccordée fluidiquement à l'enceinte secondaire (31), le dispositif de commande (30) étant alors adapté à déplacer la couche (22) de métal M de l'enceinte intermédiaire (45) à la suite de la phase de préparation, dans l'enceinte principale (21) pour la phase de production.

2. Réacteur électrochimique (1) selon la revendication 1, dans lequel l'enceinte principale (21) et l'enceinte secondaire (31) sont raccordées l'une à l'autre par un circuit de recirculation de l'électrolyte (E).

3. Réacteur électrochimique (1) selon la revendication 2, dans lequel l'électrolyte (E) présente un volume supérieur à celui de l'enceinte principale (21) et inférieur ou égal à celui de l'enceinte secondaire (31).

4. Réacteur électrochimique (1) selon la revendication 2 ou 3, dans lequel les électrodes négative et positive sont situées dans l'enceinte intermédiaire (45), l'électrolyte (E) présentant un volume supérieur à celui de l'enceinte intermédiaire (45) et inférieur ou égal à celui de l'enceinte secondaire (31).

5. Réacteur électrochimique (1) selon l'une quelconque des revendications 2 à 4, dans lequel l'enceinte secondaire (31) est située au-dessus de l'enceinte principale (21), le circuit de recirculation comportant des conduits d'évacuation (32) et de recirculation (33), le conduit d'évacuation (32) débouchant sur un port supérieur de l'enceinte principale (31) et le conduit de recirculation (33) débouchant sur un port inférieur de l'enceinte secondaire (31).

6. Réacteur électrochimique (1) selon la revendication 5, dans lequel le dispositif de stockage et de fourniture d'hydrogène (20) est adapté à déplacer, lors de la phase de production, au moins une partie de l'électrolyte (E) par gravité dans l'enceinte principale (21), pour venir au contact de la couche (22) de métal M en phase solide.

7. Réacteur électrochimique (1) selon l'une quelconque des revendications 1 à 6, dans lequel les électrodes négative et positive sont situées dans l'enceinte intermédiaire (45), l'enceinte secondaire (31) étant située au-dessus de l'enceinte intermédiaire (45) et de l'enceinte principale (21), et étant raccordée :

◦ à l'enceinte intermédiaire (45) par un conduit d'évacuation (46) et un conduit de recirculation (47), le conduit d'évacuation (46) débouchant sur un port supérieur de l'enceinte intermédiaire (45) et le conduit de recirculation (47) débouchant sur un port inférieur de l'enceinte secondaire (31) de manière à permettre une recirculation de l'électrolyte (E) entre les enceintes secondaire (31) et intermédiaire (45) lors de la phase de préparation ;

◦ à **l'enceinte** principale (21) par un conduit d'évacuation (32) et un conduit de recirculation (33), le conduit d'évacuation (32) débouchant sur un port supérieur de l'enceinte principale (21) et le conduit de recirculation (33) débouchant sur un port inférieur de l'enceinte secondaire (31) de manière à permettre une recirculation de l'électrolyte (E) entre les enceintes secondaire (31) et principale (21) lors de la phase de production.

8. Réacteur électrochimique (1) selon l'une quelconque des revendications 6 ou 7, dans lequel le dispositif de stockage et de fourniture (20) comporte un conduit de transfert (48) raccordant l'enceinte intermédiaire (45) et l'enceinte secondaire (31), et débouchant sur un port inférieur de l'enceinte intermédiaire (45).

9. Générateur électrique à hydrogène, destiné à produire de l'énergie électrique à partir d'hydrogène gazeux, comportant :

◦ un réacteur électrochimique selon l'une quelconque des revendications précédentes ;
◦ un moteur à hydrogène (10), adapté à produire de l'énergie électrique à partir de l'hydrogène gazeux fourni par le dispositif de stockage et de fourniture (20) du réacteur électrochimique, comportant un collecteur d'entrée (12a) pour recevoir l'hydrogène, raccordé à l'enceinte principale (21).

10. Générateur électrique à hydrogène selon la revendication 9, où le collecteur d'entrée (12a) est raccordé à l'enceinte principale (21) via l'enceinte secondaire (31).

11. Procédé de production d'hydrogène gazeux par le réacteur électrochimique selon l'une quelconque des revendications 1 à 8, comportant les étapes suivantes :

◦ lors de la phase d'attente, séparation physique de l'électrolyte (E) et de la couche (22) de métal M en phase solide, par le dispositif de commande (30), de manière à présenter la configuration de retrait ; puis
◦ lors de la phase de production, mise au contact de l'électrolyte (E) et de la couche (22) de métal M en phase solide dans l'enceinte principale (21), par le dispositif de commande (30), conduisant à l'oxydation de cette couche (22) du métal M en phase solide par l'électrolyte (E) et donc à la production d'hydrogène gazeux ; puis
◦ lors de la phase de préparation, mise en contact de l'électrolyte (E) avec les électrodes négative et positive (41, 42), l'alimentation électrique étant activée, conduisant à un dépôt de la couche (22) de métal M en phase solide sur l'électrode négative (41) et à une production d'oxygène gazeux à l'électrode positive.

12. Procédé de production d'hydrogène gazeux selon la revendication 11, comportant, après la phase de préparation, un nouveau cycle formé des phases d'attente, de production et de préparation.

13. Procédé de production d'énergie électrique par le générateur électrique à hydrogène selon la revendication 9 ou 10, comportant :

◦ lors de la phase d'attente, séparation physique de l'électrolyte et de la couche de métal M solide, par le dispositif de commande, de manière à présenter la configuration de retrait ; puis
◦ lors de la phase de production, mise au contact de l'électrolyte et de la couche de métal M en phase solide dans l'enceinte principale, par le dispositif de commande, conduisant à l'oxydation de cette couche du métal M en phase solide par l'électrolyte et donc à la production d'hydrogène gazeux, lequel est fourni au moteur à hydrogène, qui produit alors de l'énergie électrique ; puis
◦ lors de la phase de préparation, mise en contact de l'électrolyte (E) avec les électrodes négative et positive (41, 42), l'alimentation électrique étant activée, conduisant à un dépôt de la couche (22) de métal M en phase solide sur l'électrode négative (41) et à une production d'oxygène gazeux à l'électrode positive.

**Patentansprüche**

1. Elektrochemischer Reaktor (1) zur Erzeugung von Wasserstoffgas bei Bedarf, der Folgendes aufweist:

∞ eine Speicher- und Bereitstellungsvorrichtung von Wasserstoff (20), die dazu ausgelegt ist, Wasserstoff zu speichern und gasförmigen Wasserstoff zu erzeugen und bereitzustellen, die Folgendes aufweist:

• eine Schicht (22) aus einem Metall M in Festphase mit einem Redoxpaar $M^{n+}/M$ und einen wässrigen flüssigen Elektrolyten (E), der dazu ausgelegt ist, die Schicht (22) aus Metall M in Festphase zu oxidieren, was zur Herstellung von gasförmigem Wasserstoff führt;
• ein Hauptgehäuse (21), das dazu ausgelegt ist, den Elektrolyten (E) und die Schicht (22) des Metalls M in Festphase aufzunehmen, und einen Ausgang zur Bereitstellung des gasförmigen Wasserstoffs aufweist;

◦ eine Steuervorrichtung (30), die dazu ausgelegt ist, eine relative Verschiebung zwischen dem Elektrolyten (E) und der Metallschicht (22) M sicherzustellen, derart, dass nacheinander zumindest die folgenden zwei Konfigurationen bereitstellbar sind:

- eine Trennkonfiguration während einer Wartephase, bei der es eine physikalische Trennung zwischen dem Elektrolyten (E) und der Schicht (22) aus Metall M gibt; und
- eine Kontaktausbildung während einer Herstellungsphase, bei der ein physikalischer Kontakt zwischen dem Elektrolyten (E) und der Schicht (22) aus Metall M im Hauptgehäuse (21) besteht, was zur Oxidation dieser Schicht (22) aus Metall M durch den Elektrolyten (E) und somit zur Herstellung von gasförmigem Wasserstoff führt;

◦ **dadurch gekennzeichnet, dass** die Speicher- und Bereitstellungsvorrichtung (20) Folgendes aufweist:

• ein Sekundärgehäuse (31), das fluidisch mit dem Hauptgehäuse (21) verbunden und dazu ausgelegt ist, den Elektrolyten (E) während mindestens der Wartephase aufzunehmen;
• eine negative Elektrode (41) und eine positive Elektrode (42), und eine mit den Elektroden (41, 42) verbundene Stromversorgung (43), wobei die Steuervorrichtung (30) dazu ausgelegt ist, Folgendes aufzuweisen: eine Kontaktausbildung während einer Vorbereitungsphase nach einer Herstellungsphase, in der es einen physikalischen Kontakt zwischen dem Elektrolyten (E) und den Elektroden (41, 42) gibt, wobei die Stromversorgung (43) aktiviert ist, was zu einer Ablagerung der Schicht (22) aus Metall M in Festphase auf der negativen Elektrode (41) und zu einer Herstellung von gasförmigem Sauerstoff an der positiven Elektrode (42) führt, wobei die so gebildete Schicht (22) aus Metall M dazu bestimmt ist, durch den Elektrolyten (E) in einer späteren Herstellungsphase oxidiert zu werden,
- wobei sich die negativen und positiven Elektroden (41, 42) wie folgt befinden: entweder im Hauptgehäuse (21); oder in einem Zwischengehäuse (45), das fluidisch mit dem Sekundärgehäuse (31) verbunden ist, wobei die Steuervorrichtung (30) dann ausgelegt ist, die Schicht (22) aus Metall M des Zwischengehäuses (45) nach der Vorbereitungsphase in das Hauptgehäuse (21) für die Herstellungsphase zu verschieben.

2. Elektrochemischer Reaktor (1) nach Anspruch 1, wobei das Hauptgehäuse (21) und das Sekundärgehäuse (31) durch einen Umwälzkreislauf verbunden sind, in dem der Elektrolyt (E) zirkuliert.

3. Elektrochemischer Reaktor (1) nach Anspruch 2, wobei der Elektrolyt (E) ein größeres Volumen als das des Hauptgehäuses (21) und kleiner oder gleich dem des Sekundärgehäuses (31) aufweist.

4. Elektrochemischer Reaktor (1) nach Anspruch 2 oder 3, wobei sich die negative und positive Elektrode im Zwischengehäuse (45) befinden, wobei der Elektrolyt (E) ein größeres Volumen als das des Zwischengehäuses (45) und kleiner oder gleich dem des Sekundärgehäuses (31) aufweist.

5. Elektrochemischer Reaktor (1) nach einem der Ansprüche 2 bis 4, wobei sich das Sekundärgehäuse (31) oberhalb des Hauptgehäuses (21) befindet, wobei der Umwälzkreislauf Abluftkanäle (32) und Umwälzkanäle (33) umfasst, der Abluftkanal (32) an einem oberen Anschluss des Hauptgehäuses (31) mündet und der Umwälzkanal (33) an einem unteren Anschluss des Sekundärgehäuses (31) mündet.

6. Elektrochemischer Reaktor (1) nach Anspruch 5, wobei die Speicher- und Bereitstellungsvorrichtung von Wasserstoff (20) dazu ausgelegt ist, während der Herstellungsphase mindestens einen Teil des Elektrolyten (E) durch Schwerkraft in das Hauptgehäuse (21) zu verschieben, um mit der Schicht (22) aus Metall M in Festphase in Kontakt zu kommen.

7. Elektrochemischer Reaktor (1) nach einem der Ansprüche 1 bis 6, wobei sich die negativen und positiven Elektroden im Zwischengehäuse (45) befinden, wobei sich das Sekundärgehäuse (31) oberhalb des Zwischengehäuses (45) und des Hauptgehäuses (21) befindet und verbunden ist:

◦ mit dem Zwischengehäuse (45) durch eine Abluftleitung (46) und eine Umwälzleitung (47), wobei die Abluftleitung (46) an einem oberen Anschluss des Zwischengehäuses (45) und die Umwälzleitung (47) an einem unteren Anschluss des Sekundärgehäuses (31) münden, um eine Umwälzung des Elektrolyten (E) zwischen dem Sekundärgehäuse (31) und dem Zwischengehäuse (45) während der Vorbereitungsphase zu ermöglichen;

o mit dem Hauptgehäuse (21) durch eine Abluftleitung (32) und eine Umwälzleitung (33), wobei die Abluftleitung (32) an einem oberen Anschluss des Hauptgehäuses (21) mündet und die Umwälzleitung (33) an einem unteren Anschluss des Sekundärgehäuses (31) mündet, um eine Umwälzung des Elektrolyten (E) zwischen dem Sekundärgehäuse (31) und dem Hauptgehäuse (21) während der Herstellungsphase zu ermöglichen.

8. Elektrochemischer Reaktor (1) nach einem der Ansprüche 6 oder 7, wobei die Speicher- und Bereitstellungsvorrichtung (20) eine Transferleitung (48) aufweist, die das Zwischengehäuse (45) und das Sekundärgehäuse (31) verbindet und in einen unteren Anschluss des Zwischengehäuses (45) mündet.

9. Elektrischer Wasserstoffgenerator zur Erzeugung elektrischer Energie aus gasförmigem Wasserstoff, der Folgendes aufweist:

◦ einen elektrochemischen Reaktor nach einem der vorhergehenden Ansprüche;
◦ einen Wasserstoffmotor (10), der dazu ausgelegt ist, aus dem von der Speicher- und Bereitstellungsvorrichtung (20) des elektrochemischen Reaktors bereitgestellten gasförmigen Wasserstoff elektrische Energie zu erzeugen, und der einen mit dem Hauptgehäuse (21) verbundenen Einlassverteiler (12a) zur Aufnahme des Wasserstoffs aufweist.

10. Elektrischer Wasserstoffgenerator nach Anspruch 9, wobei der Einlassverteiler (12a) über das Sekundärgehäuse (31) mit dem Hauptgehäuse (21) verbunden ist.

11. Verfahren zur Herstellung von gasförmigem Wasserstoff mittels eines elektrochemischen Reaktors nach einem der Ansprüche 1 bis 8, das die folgenden Schritte aufweist:

◦ während der Wartephase, physikalisches Trennen des Elektrolyten (E) und der Schicht (22) aus Metall M in Festphase durch die Steuervorrichtung (30), so dass die Trennkonfiguration dargestellt wird; dann
◦ während der Herstellungsphase, Inkontaktbringen des Elektrolyten (E) und der Schicht (22) aus Metall M in Festphase im Hauptgehäuse (21) durch die Steuervorrichtung (30), was zur Oxidation dieser Schicht (22) aus Metall M in Festphase durch den Elektrolyten (E) und somit zur Herstellung von gasförmigem Wasserstoff führt; dann
o während der Vorbereitungsphase, Inkontaktbringen des Elektrolyten (E) mit der negativen und der positiven Elektrode (41, 42), wobei die Stromversorgung aktiviert ist, was zu einer Ablagerung der Schicht (22) aus Metall M in Festphase auf der negativen Elektrode (41) und zur Herstellung von gasförmigem Sauerstoff an der positiven Elektrode führt.

12. Verfahren zur Herstellung von gasförmigem Wasserstoff nach Anspruch 11, das nach der Vorbereitungsphase einen neuen Zyklus aufweist, der aus den Warte-, Herstellungs- und Vorbereitungsphasen gebildet wird.

13. Verfahren zur Herstellung elektrischer Energie durch den elektrischen Wasserstoffgenerator nach Anspruch 9 oder 10, das Folgendes aufweist:

◦ während der Wartephase, physikalische Trennung des Elektrolyten und der Schicht aus festem Metall M durch die Steuervorrichtung, so dass die Trennkonfiguration dargestellt wird; dann
◦ während der Herstellungsphase Kontakt zwischen dem Elektrolyten und der Metallschicht M in der Festphase im Hauptgehäuse durch die Steuervorrichtung, was zur Oxidation dieser Metallschicht M in der Festphase durch den Elektrolyten und somit zur Herstellung von gasförmigem Wasserstoff führt, der dem Wasserstoffmotor zugeführt wird, der dann elektrische Energie erzeugt; und dann
◦ während der Vorbereitungsphase, Inkontaktbringen des Elektrolyten (E) mit der negativen und der positiven Elektrode (41, 42), wobei die Stromversorgung aktiviert ist, was zu einer Ablagerung der Schicht (22) aus Metall M in Festphase auf der negativen Elektrode (41) und zur Herstellung von gasförmigem Sauerstoff an der positiven Elektrode führt.

**Claims**

1. Electrochemical reactor (1), intended to produce gaseous hydrogen on demand, including:

◦ a hydrogen storage and supply device (20), adapted to store hydrogen and to produce and supply gaseous hydrogen, including:

• a layer (22) of a solid-phase metal M of a redox couple $M^{n+}/M$, and an aqueous liquid electrolyte (E) adapted to oxidize the layer (22) of the solid-phase metal M resulting in the production of gaseous hydrogen;
• a main chamber (21), adapted to receive the electrolyte (E) and the layer (22) of the solid-phase metal M, and including an outlet for supplying the gaseous hydrogen;

◦ a control device (30), adapted to ensure a relative movement between the electrolyte (E) and the metal M layer (22), so as to be able to successively present at least the following two configurations:

- a withdrawal configuration during a standby phase, where there is a physical separation between the electrolyte (E) and the metal M layer (22); and
- a contact configuration during a production phase, where there is physical contact between the electrolyte (E) and the metal M layer (22) in the main chamber (21), resulting in the oxidation of this layer (22) of the metal M by the electrolyte (E) and therefore in the production of gaseous hydrogen;

◦ **characterized in that** the storage and supply device (20) includes:

• a secondary chamber (31), fluidly connected to the main chamber (21), and adapted to receive the electrolyte (E) during at least the standby phase;
• a negative electrode (41) and a positive electrode (42), and an electric power supply (43) connected to the electrodes (41, 42), the control device (30) being adapted to present: a contact configuration during a preparation phase, following a production phase, in which there is physical contact between the electrolyte (E) and the electrodes (41, 42), the electric power supply (43) being activated, resulting in a deposition of the solid-phase metal M layer (22) on the negative electrode (41) and in a production of gaseous oxygen at the positive electrode (42), the metal M layer (22) thus formed being intended to be oxidized by the electrolyte (E) during a subsequent production phase,

- the negative and positive electrodes (41, 42) being located: either in the main chamber (21); or in an intermediate chamber (45) fluidly connected to the secondary chamber (31), the control device (30) then being adapted to move the metal M layer (22) from the intermediate chamber (45) following the preparation phase, into the main chamber (21) for the production phase.

2. Electrochemical reactor (1) according to claim 1, wherein the main chamber (21) and the secondary chamber (31) are connected to each other by an electrolyte (E) recirculation circuit.

3. Electrochemical reactor (1) according to claim 2, wherein the electrolyte (E) has a volume larger than that of the main chamber (21) and smaller than or equal to that of the secondary chamber (31).

4. Electrochemical reactor (1) according to claim 2 or 3, wherein the negative and positive electrodes are located in the intermediate chamber (45), the electrolyte (E) having a volume larger than that of the intermediate chamber (45) and smaller than or equal to that of the secondary chamber (31).

5. Electrochemical reactor (1) according to any one of claims 2 to 4, wherein the secondary chamber (31) is located above the main chamber (21), the recirculation circuit including discharge (32) and recirculation (33) ducts, the discharge duct (32) opening onto an upper port of the main chamber (31) and the recirculation duct (33) opening onto a lower port of the secondary chamber (31).

6. Electrochemical reactor (1) according to claim 5, wherein the hydrogen storage and supply device (20) is adapted to move, during the production phase, at least one portion of the electrolyte (E) by gravity in the main chamber (21), to come into contact with the solid-phase metal M layer (22).

7. Electrochemical reactor (1) according to any one of claims 1 to 6, wherein the negative and positive electrodes are located in the intermediate chamber (45), the secondary chamber (31) being located above the intermediate chamber (45) and the main chamber (21), and being connected:

◦ to the intermediate chamber (45) via a discharge duct (46) and a recirculation duct (47), the discharge duct (46) opening onto an upper port of the intermediate chamber (45) and the recirculation duct (47) opening onto a lower port of the secondary chamber (31) so as to enable a recirculation of the electrolyte (E) between the secondary (31) and intermediate (45) chambers during the preparation phase;
◦ to the main chamber (21) by a discharge duct (32) and a recirculation duct (33), the discharge duct (32) opening onto an upper port of the main chamber (21) and the recirculation duct (33) opening onto one lower port of the secondary chamber (31) so as to enable a recirculation of the electrolyte (E) between the secondary (31) and main (21) chambers during the production phase.

8. Electrochemical reactor (1) according to any one of claims 6 or 7, wherein the storage and supply device (20) includes a transfer duct (48) connecting the intermediate chamber (45) and the secondary chamber (31), and opening onto a lower port of the intermediate chamber (45).

9. Hydrogen electric generator, intended to produce electrical energy from gaseous hydrogen, including:

   ◦ an electrochemical reactor according to any one of the preceding claims;
   ◦ a hydrogen engine (10), adapted to produce electrical energy from the gaseous hydrogen supplied by the storage and supply device (20) of the electrochemical reactor, including an inlet manifold (12a) for receiving the hydrogen, connected to the main chamber (21).

10. Hydrogen electric generator according to claim 9, where the inlet manifold (12a) is connected to the main chamber (21) via the secondary chamber (31).

11. Method for producing gaseous hydrogen by the electrochemical reactor according to any one of claims 1 to 8, including the following steps:

   ◦ during the standby phase, physically separating the electrolyte (E) and the solid-phase metal M layer (22), by the control device (30), so as to present the withdrawal configuration; then
   ◦ during the production phase, bringing the electrolyte (E) and the solid-phase metal M layer (22) into contact in the main chamber (21), by the control device (30), resulting in the oxidation of this layer (22) of the solid-phase metal M by the electrolyte (E) and therefore in the production of gaseous hydrogen; then
   ◦ during the preparation phase, bringing the electrolyte (E) into contact with the negative and positive electrodes (41, 42), the electric power supply being activated, resulting in a deposition of the layer (22) of the solid-phase metal M on the negative electrode (41) and in a production of gaseous oxygen at the positive electrode.

12. Method for producing gaseous hydrogen according to claim 11, including, after the preparation phase, a new cycle formed by the standby, production and preparation phases.

13. Method for producing electrical energy by the hydrogen electric generator according to claim 9 or 10, including:

◦ during the standby phase, physical separation of the electrolyte and the solid metal M layer, by the control device, so as to present the withdrawal configuration; then
◦ during the production phase, bringing the electrolyte and the solid-phase metal M layer into contact in the main chamber, by the control device, resulting in the oxidation of this layer of the solid-phase metal M by the electrolyte and therefore in the production of gaseous hydrogen, which is supplied to the hydrogen engine, which then produces electrical energy; then
◦ during the preparation phase, bringing the electrolyte (E) into contact with the negative and positive electrodes (41, 42), the electric power supply being activated, resulting in a deposition of the layer (22) of the solid-phase metal M on the negative electrode (41) and in a production of gaseous oxygen at the positive electrode.

**Fig.1**

Fig.2A

Fig.2B

Fig.2C

Fig.2D

**Fig.3**

**Fig.4**

**Fig.5A**

**Fig.5B**

**Fig.5C**

**Fig.5D**

**RÉFÉRENCES CITÉES DANS LA DESCRIPTION**

**Documents brevets cités dans la description**

- US 8858910 B2
- WO 2019193281 A